# EUROPEAN PATENT APPLICATION

(11) **EP 4 484 920 A1**
(43) Date of publication of application: **01.01.2025**
(21) Application number: 23760160.4
(22) Date of filing: 27.02.2023
(51) Int. Cl.: G01N 15/14, G01N 21/03

(54) **IN-DROPLET PARTICLE DETECTION METHOD, METHOD FOR FRACTIONING/DISPENSING DROPLET INCLUDING PARTICLES, METHOD FOR REMOVING PARTICLES TO OUTSIDE FROM DROPLET AFTER DISPENSING, AND DEVICE THEREFOR**

(30) Priority: 25.02.2022 JP 2022028476
(71) Applicant: On-Chip Biotechnologies Co., Ltd., Koganei-shi, Tokyo 184-0012 (JP)
(72) Inventor: TAKEDA Kazuo, Koganei-shi, Tokyo 184-0012 (JP); INO Takahide, Koganei-shi, Tokyo 184-0012 (JP); MORISHITA Yuji, Koganei-shi, Tokyo 184-0012 (JP); OSAWA Kosuke, Koganei-shi, Tokyo 184-0012 (JP); ISHIGE Masayuki, Koganei-shi, Tokyo 184-0012 (JP); FUJIMURA Yuu, Koganei-shi, Tokyo 184-0012 (JP)
(74) Representative: Gille Hrabal Partnerschaftsgesellschaft mbB Patentanwälte
(86) International application number: PCT/JP2023/007008
(87) International publication number: WO 2023/163162

(57) **Abstract**

The object of the present invention is to provide a method for screening particles such as cells efficiently.

The object can be solved by a method for detecting a particle in droplet by illuminating light with one direction onto the particle which is contained in water in oil while it is flowing together with the oil in a flow path and detecting changes in the intensity of the light signal from the particles over time, characterized in that the particle in the droplet is detected by measuring the scattered light of the droplet and the scattered light of the particle.

## Description

### TECHNICAL FIELD

The present invention relates to a method for detecting a particle in droplet and a device for detecting a particle in droplet. According to the present invention, particles such as cells can be efficiently screened. In addition, the present invention relates to a method for detecting a particle in droplet in oil, a droplet dispensing, and a method for collecting a fine particle in a droplet. According to the present invention, droplets in oil containing particles such as cells can be sorted efficiently, dispensed into a multiwell plate, and cells can be efficiently collected from droplets in the wells.

### BACKGROUND ART

For single cell screening, single cell dispensing into each well of a multi-well plate are used. In this case, about 2,600 of 384-well plates are needed to prepare 1 million wells. On the other hand, there is a method in which a single cell is contained in a droplet in oil with a diameter of about 100 µm. In this case, about one million droplets can be contained in about 0.2mL of oil, and thus one million cells can be separated and stored in a small volume. Therefore, the use of water in oil enables more efficient screening in terms of time, space, and cost compared to the use of multi-well plates.

The following technologies are known as screening methods using the water in oil.

### (1) Technology for forming water in oil

A technique for forming droplets in oil by joining oil path and aqueous solution path in a micro-flow path to form uniformly sized droplets in oil is described in patent literature 1.

### (2) A method for identifying droplets containing cell(s) in formed water in oil

As a method for identifying a droplet containing cell(s) in formed water in oil, there is a method for detecting fluorescently labeled cells in a droplet by using fluorescence, in which preliminarily fluorescently-labeled cells are contained in a droplet (Patent literature 2). Furthermore, a method for detecting bacteria in a droplet by using a fluorescent probe consisting of a fluorescent molecule and a quencher molecule linked to an RNA chain to detect RNA-degrading enzymes, which are secreted by bacteria, in the droplet by fluorescence, is disclosed. (Patent literature 3). Non-patent literature 1 describes a technique using a special fluorescent probe called FRET probe, which detects only cells secreting the antibody of interest in a droplet. As a method for detecting the growth of bacteria contained in a droplet in oil, an agarose gel is formed in a droplet in oil, and the external oil is replaced by an aqueous solution to eliminate the interface between the oil and the droplet and reduce the scattered light from the droplet, resulting in highly sensitive detection of bacteria in the gel (Patent literature 8). A method of identifying particles in a droplet by acquiring images of multiple droplets flowing in a path at once has been reported (Non-Patent literature 8).

### (3) Technology for sorting only necessary droplets

The technologies for sorting droplets in oil in micro-flow path based on detection signals are described in the Patent literatures 4 to 6. Patent literatures 4 and 5 discloses methods for sorting droplets in micro-flow path by changing the flow of the droplets of interest using an electric field. Patent literature 6 discloses a method for sorting droplets by applying a pulse flow to the droplets of interest and changing the flow of droplets of interest, in micro-flow path.

### (4) Technology for dispensing droplets in oil in single units of one droplet into a multiwell plate

A technique for dispensing droplets in oil in units of one droplet into a multiwell plate is disclosed in Patent literature 7. In this technology, droplets in oil is dispensed into the atmosphere one by one from a nozzle by means of pneumatic control.

### (5) Techniques for extracting cells in a droplet in oil into the external liquid layer

In the technique for extracting cells in a droplet in oil to the external liquid layer, it is necessary to destroy the droplets and fuse the liquid in the droplets to the external liquid layer.

In the method described in Patent literature 9, a group of droplets in oil is placed between electrodes, an AC electric field is generated, and the droplets are broken and separated into a liquid layer and an oil layer. The cells in the droplets are collected by moving into the liquid phase. In Patent literature 10, the droplet is broken by ultrasonic treatment and separated into a liquid layer and an oil layer. In Patent literature 11, the droplet is broken by an alternating electric field while the droplet in oil flows in a micro-flow path, and the droplet is separated into a liquid layer and an oil layer. In Patent literature 12, the droplet is broken by microwave treatment at 915 MHz and separated into a liquid layer and an oil layer. In Patent literature 13, droplets are broken by adding a chemical composition for droplet fusion, and separated into a liquid layer and an oil layer. In the method described in Non-Patent literature 4, a group of droplets in oil in a container are destroyed by a hand-held anti-static ionizer gun and separated into a liquid layer and an oil layer.

### CITATION LIST

### PATENT LITERATURE

[PATENT LITERATURE 1] WO2002/068104
[PATENT LITERATURE 2] US20090068170
[PATENT LITERATURE 3] WO2019073902
[PATENT LITERATURE 4] US7,968,287
[PATENT LITERATURE 5] WO2015161223
[PATENT LITERATURE 6] WO2016182034
[PATENT LITERATURE 7] WO2018234821
[PATENT LITERATURE 8] US20120196770A1
[PATENT LITERATURE 9] JP4961553B2
[PATENT LITERATURE 10] US6716358B2
[PATENT LITERATURE 11] JP6214025B2
[PATENT LITERATURE 12] US7486,248B2
[PATENT LITERATURE 13] US2021/03108

### NON-PATENT LITERATURE

[NON-PATENT LITERATURE 1] Josephides D., et al., SLAS Technol. 2020 Apr;25(2): 177-189
[NON-PATENT LITERATURE 2] Ota Y., et al. (2019) PLoS ONE 14(4): e0214533.
[NON-PATENT LITERATURE 3] Kara K., Brower et al., Anal. Chem. 2020, 92, 13262-13270
[NON-PATENT LITERATURE 4] Karbaschi M., BIOMICROFLUIDICS 11, 044107 (2017)
[NON-PATENT LITERATURE 5] Sanchez-Clemente, et al., Proceedings 2018, 2, 1297
[NON-PATENT LITERATURE 6] T. Mordhorst, et al., Mar. Drugs 2015, 13, 920-935
[NON-PATENT LITERATURE 7] Del Ben, et al., 22Angew. Chem. Int. Ed. 2016, 55, 1-5
[NON-PATENT LITERATURE 8] Samaneh Mashaghi, et al., TrAC Trends in Analytical Chemistry, Volume 82, 2016, Pages 118-125

### SUMMARY OF INVENTION

### TECHNICAL PROBLEM

The object of the present invention is to provide a method for screening particles such as cells efficiently. In the cell screening technique using droplets, it is necessary to separate only droplets containing cells, dispense each droplet into a multi-well plate one by one, extract cells from the droplets, and culture the cells for analysis. However, it is impossible to realize the above sequence of processes by the combination of known technologies. The object of present invention is to solve the above problem.

### SOLUTION TO PROBLEM

The present inventors have conducted intensive studies into a method for screening particles such as cells efficiently, and as a result, surprisingly, found that particles such as cells in the droplet can be detected without staining, by measuring the scattered light of the droplet and the scattered light of the particles separately.

The present invention is based on the above findings.

Accordingly, the present invention relates to:
[1] a method for detecting a particle in droplet by illuminating light with one direction onto the particle which is contained in water in oil while it is flowing together with the oil in a flow path and detecting changes in the intensity of the light signal from the particles over time, characterized in that the particle in the droplet is detected by measuring the scattered light of the droplet and the scattered light of the particle,
[2] the method for detecting a particle in droplet of the item [1], wherein the scattered light is a forward scattered light,
[3] the method for detecting a particle in droplet of the item [1] or [2], wherein the measurement of the scattered light of the particle is set as the measurement time of the scattered light of the particle at a predetermined time after a certain elapsed time from the start of the scattered light generation of the droplet,
[4] the method for detecting a particle in droplet according to any one of the items [1] to [3], wherein a liquid contained in the droplet is a hydrogel,
[5] the method for detecting a particle in droplet according to any one of the items [1] to [3], wherein the particle is a cell,
[6] the method for detecting a particle in droplet of the item [4], wherein the hydrogel is a low melting point gel, and the method comprises the steps of: (a) encapsulating a liquid containing the particle and the low melting point gel into droplet at a temperature between the melting point of the low melting point gel and 40°C, to form water in oil, and (b) allowing to stand the droplet below the melting point to gelate the liquid,
[7] the method for detecting a particle in droplet of the item [6], wherein the method further comprises the step of (c) culturing the particle which is the cell,
[8] the method for detecting a particle in droplet of the item [6] or [7], wherein the method further comprises the step of (d) collecting the droplet containing the particle to a collection flow path by pulse flow,
[9] the method for detecting a particle in droplet of the item [7], wherein a cell proliferation is detected by change in pH in the droplet,
[10] the method for detecting a particle in droplet of the item [9], wherein the change in pH is detected by using a dye whose fluorescence spectrum changes depending on pH,
[11] Droplets containing biological particles such as bacteria and cells in fluorine water-in-oil are sorted using pulse flow and taken into the collection flow path one by one. In a reservoir filled with fluorine oil connected to the collection flow path, while placing a dispensing pipette on standby above the terminal outlet of the collection flow path, after sorted droplets leave the end of the collection flow path due to the difference in specific gravity, they float up and are taken into the pipette. In this state of taking, the pipette is moved to dispense the droplets one by one into an external multi-well plate. After dispensing, the pipette is returned to its original position of the collection reservoir, and pulse flow sorting is resumed to repeat the dispensing process.
[12] a method for collecting a particle inside water in oil to outside of a droplet, comprising the step of applying electromagnetic wave to droplets in oil containing a particle, to destroy the droplets,
[13] a method for collecting a particle inside water in oil to outside of a droplet, comprising the step of adding droplet(s) in oil containing no particle to droplet(s) in oil containing a particle, and fusing and destroying the droplets by applying electromagnetic waves to the group of droplets in oil,
[14] the method for collecting a particle inside water in oil to outside of a droplet of the item [12] or [13], wherein the electromagnetic waves are applied to the droplet(s) in oil in a well of a multi-well plate,
[15] the method for collecting a particle inside water in oil to outside of a droplet of the item [13], wherein the electromagnetic waves are applied to the droplet(s) in oil by using an electrode pattern placed on a bottom of the well.
[16] a device for detecting a particle in droplet by illuminating light with one direction onto the particle which is contained in water in oil while it is flowing together with the oil in a flow path and detecting changes in the intensity of the light signal from the particles over time, characterized in that the particle in the droplet is detected by measuring the scattered light of the droplet and the scattered light of the particle, and
[17] a dispensing method, wherein a droplet of interest in water in fluorine-based oil is taken into a collection flow path by pulse flow, and the droplet flows from flow path into a collection reservoir, and then the droplet is taken into a dispensing pipette by the procedure of floating due to the difference in specific gravity between fluorine oil and droplet, and then the dispensing pipette is dispensed into a multi-well plate.

### ADVANTAGEOUS EFFECTS OF INVENTION

According to the method for detecting a particle in droplet and the device for detecting a particle in droplet, it is possible to efficiently screening particles such as cells. In particular, particles such as cells in droplets can be detected efficiently. The present invention can be used, without limitation, for screening bacteria that produce substances with specific beneficial functions for use in biological pesticides, or screening antibody-producing cells that produce antibodies that specifically bind specific antigens for use in antibody drugs.

### BRIEF DESCRIPTION OF THE DRAWINGS

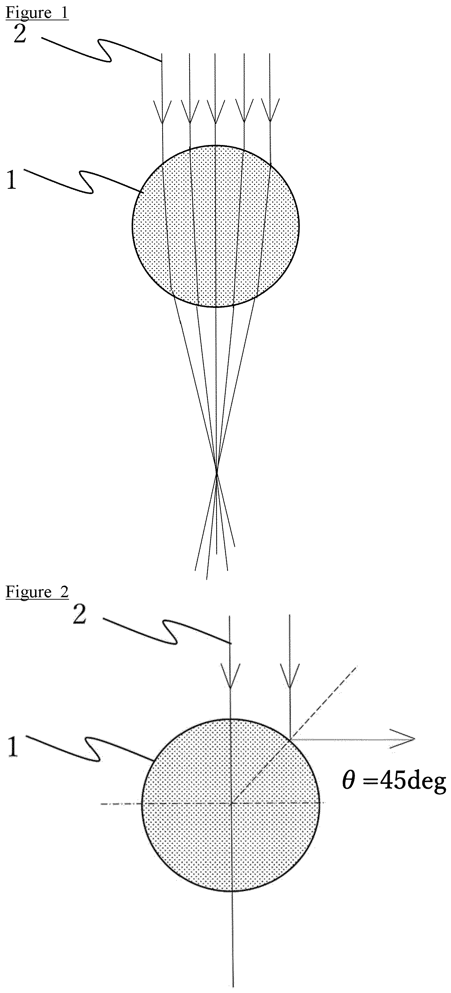

FIG. 1 is a view showing a ball lens effect on the illumination light of a droplet in fluorine-based oil. That is, the transmission of light 2 with one direction such as a laser beam as the illumination light, is shown, when a droplet 1 in oil is illuminated with light. For example, a glass sphere in air (1.0 of the refractive index of the outside, about 1.4 of the refractive index of the glass) is used as the ball lens. A droplet in fluorine-based oil also converges light with one direction in a similar manner. The refractive index of fluorine based oil is about 1.3, and the refractive index of water is 1.33. Therefore, since the refractive index of the droplet is larger than that of its surroundings, the droplet converges light in the same way as a ball lens.
FIG. 2 is a view showing the effect of reflection by the surface of a droplet. That is, the reflected light is shown when a droplet 1 in oil is illuminated with a light 2 light with one direction such as a laser beam. The light ray illuminated on the intersection region of the normal of θ=45 degrees extending from the center of the droplet and the droplet surface is reflected 90 degrees to the side of the droplet. The reflected light is detected as side scattered light (SSC).

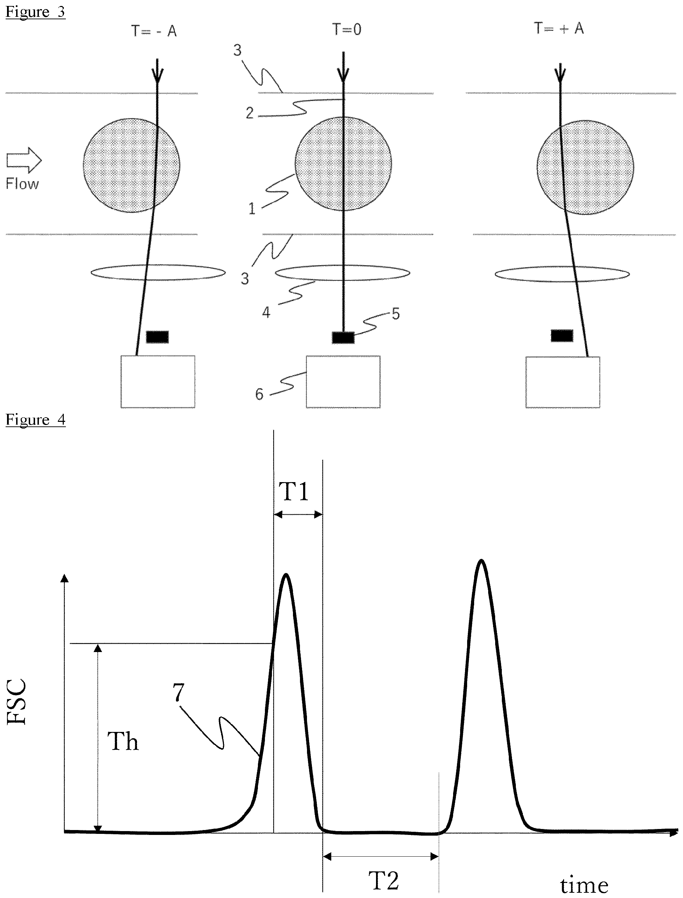

FIG. 3 is views showing the direction change of the illumination light after it penetrates the particle due to the movement of the water in oil flowing in the path, when the droplet in fluorine oil is illuminated with a light with one direction such as a laser beam. That is, the change on time of the direction of transmitted light is shown when a droplet passes through the area where the droplet in oil1 flowing in the path is illuminated with light 2 with one direction from the top. The time when the collimated illumination light passes through the center of the droplet is set as T=0. At this time, the direct transmitted light of the light with one direction does not enter the photodetector 6, which is installed at the rear of the condenser lens 4 for detection, because it is blocked by the light shield plate 5. However, when the light 2 with one direction enters the droplet at a position off the center of the droplet due to the movement of the droplet (before and after T=0, i.e., when T=-A and T=+A), the transmitted light is shifted from the light shield plate 5 and enters the detector 6. Droplets converge illumination light in fluorine oil, which has a refractive index smaller than that of water, and therefore the refraction angles of transmitted light are opposite before and after T=0. Therefore, when the signal intensity of forward scattered light of forward scattered light (FSC) is detected under the block of transmitted light, there is an obstacle that the intensity of transmitted light of the illumination light is superimposed on the FSC signal of the droplet in the oil as the value of the FSC of the droplet. This phenomenon is a serious obstacle for the detection of cells in water in oil by scattered light.

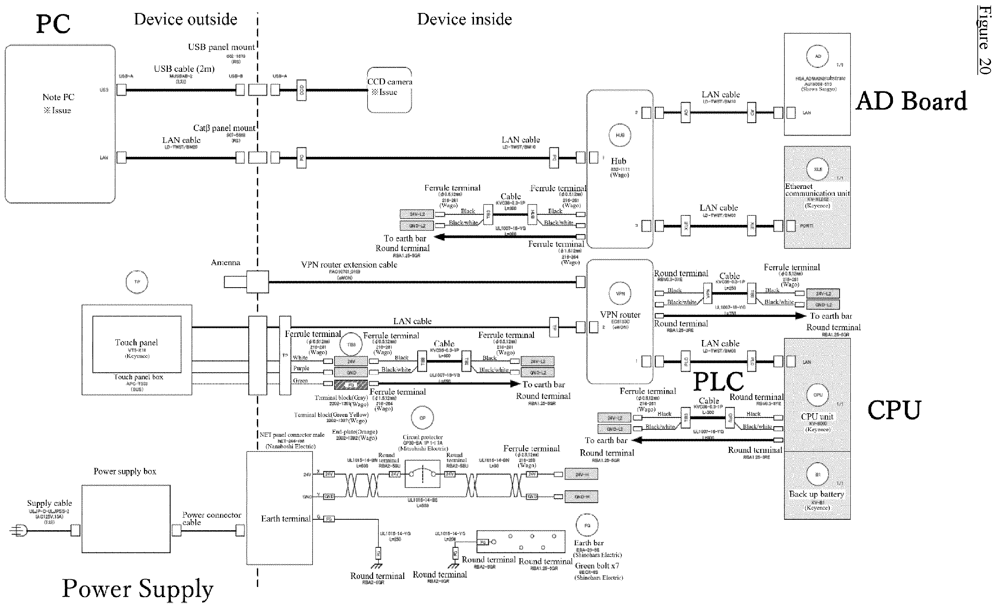

FIG. 4 is a graph showing the change on time of the signal intensity of forward scattered light (FSC) of droplet in fluorine oil. As shown in Figure 3, scattered light is generated when a droplet in oil 1 passes through the region where illumination light 2 is illuminated from the top. The changes on time of the signal intensity of the scattered light are shown, in the above case. That is, the figure shows the signal waveform of the forward scattered light, where the vertical axis indicates the signal intensity in the forward direction (FSC) and the horizontal axis indicates the time. Two strong signals are generated for each droplet in oil. These two strong signals are signals before and after T=0, when the transmitted light is shifted from the light shield plate as shown in Figure 3. That is, two peaks are generated in the detection of FSC for one droplet in oil. The interval between the two peaks is determined by the size and flow rate of the droplet in oil. Between the two peaks, there is an area of low signal intensity. In the area of low signal intensity, scattered light signals generated by biological particles such as cells in the droplet can be detected. For example, the method to quantify the signal intensity of particles in a droplet between the two peaks can be performed as follows. A detection threshold (Th) for detecting the FSC peak value of a droplet is set, and the signal waveform with a time width of T2 is measured after the elapse of time T1 from the detection of Th. By quantifying the maximum value of the waveform data or the area of the signal intensity of the waveform data during the time T2, the scattered light intensity of biological particles in a droplet can be detected. The method for detecting the signal waveform of the scattered light signal is described below. The analog signal detected by the photodetector at the same wavelength as the illumination light is digitized by an analog-to-digital converter at each sampling time and arithmetically processed by an FPGA circuit. The signal data of the time interval when one droplet passes through the illumination laser region is recorded in the memory. The analog-to-digital converter is activated by detecting a signal of a threshold value or more to detect a single droplet, and the operation is stopped after a certain period of time. The time interval between the start and the stop is the waveform observation time. The FPGA circuit measures and records the maximum value of the waveform data or the area of the signal intensity of the waveform data within the time width T2 after the elapse of time T1 from the above Th detection. The AD conversion circuit is shown in Figure 20.

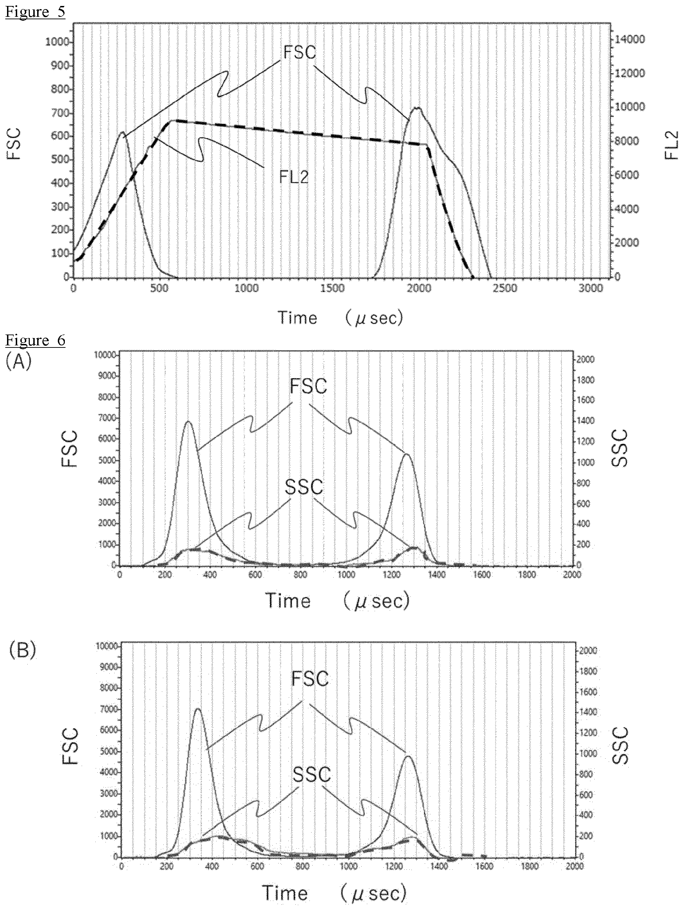

FIG. 5 is a graph showing the actual measurement data of signal waveform of FSC of a droplet in fluorine-based oil with a diameter of 100 µm. The conditions of the measurement are described below. An illumination light source is a semiconductor laser with a wavelength of 488 nm. A beam shape is a long ellipse with a short axis width beam size of 25 µm and a long axis width beam size of 80 µm. The short axis direction is aligned with the flow direction, and it is illuminated. A resin flow path tip with a flow path size of flow path width and depth of 150 µm is used, and fluorine oil is used as a sheath liquid to measure the scattered light signals (FSC and fluorescence signals) of droplets in fluorine oil. The change on time of the signal of each droplet is recorded. In this data, two peaks are detected as in Figure 4. In addition to the FSC signal, the waveform of the fluorescence signal (FL2) measured at the same time is shown. This fluorescence is derived from the FITC dye that was mixed into the aqueous solution before the formation of the droplet (water in oil). This result confirms that the optical signal inside the droplet can be detected between the two FSC signal peaks. The scattered light signal of cells inside the droplet can be detected with a detection sensitivity lower than the intensity of the scattered light signal of the droplet, by the detection of the scattered light signal between the two peaks. The value of the two peaks of FSC is 500 to 600. On the other hand, the noise level of the signal in the time region of 1100µsec between the two peaks is less than 10. Therefore, a signal of about 1/500 of the scattered light from the droplet itself can be detected. As an example of the measurement condition of the scattered light intensity in a droplet corresponding to the waveform data shown in the present graph, the following settings can be used: Th=500, T1=400µsec, and T2=1200µsec. By the above setting, the scattered light of particles such as cells in a droplet can be detected with high sensitivity without the influence of two peaks of scattered light from the droplet.
FIG. 6 is graphs showing the FSC signal waveform and SSC signal waveform of a 100-µm-diameter droplet in fluorine-oil without gel in the droplet (A) and with gel formed in the droplet (B). The detection conditions shown in Figure 6 were set to be more sensitive than those shown in Figure 5, and for the detection of bacteria. For this reason, the FSC value in Figure 6 is one order of magnitude higher than that in Figure 5. The data of signal intensities in Figure 6 and subsequent figures are set to the common sensitivity for the detection of bacteria. The droplets without forming gel contain only PBS buffer, and the droplets with forming gel contain 1.5% agarose gel. The scattered light signal intensity of the droplet is almost unchanged whether the droplet contains PBS or agarose gel. In the case of the agarose gel, it is possible to grow particles such as bacteria and fungi in the agarose gel. The growth of bacteria in the gel is localized. Therefore, the localized growth area has a different refractive index from that of the gel, and the intensity of scattered light becomes large. Therefore, by using the gel, the growth of bacteria or fungi can be localized and the signal intensity can be increased.

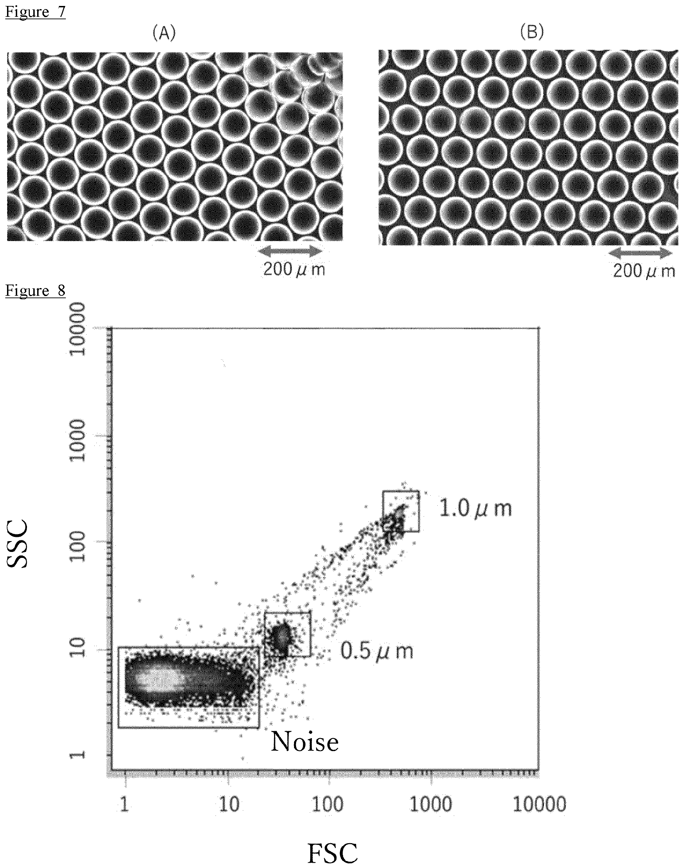

FIG. 7 is photographs showing droplets in fluorine-oil without gel (A) and droplets in fluorine-oil with gel (B). The droplets without gel are droplets containing PBS buffer only.
   In the droplets with gel, the gel is soaked by PBS. There is no apparent difference between the droplet without gel (A) and the droplet with gel (B). This result is consistent with the fact that there is no difference in the FSC signal waveforms between the gel-forming droplet (A) and the gel-free droplet (B) shown in Figure 6.
FIG. 8 is a scatter plots showing the scattered light signal intensity data of standard particles of 0.5µm diameter and 1.0µm diameter. That is, the detection sensitivity of particles by scattered light detection in the method of measuring particles of water in oil in in micro-flow path by laser illumination was confirmed. It is the scatter plots showing the signal intensities of FSC and SSC for two kinds of polystyrene standard particles of 0.5µm diameter and 1.0µm diameter suspended in water. The distribution of particles of 0.5µm diameter, the distribution of particles of 1.0µm diameter, and the electrical noise distribution are shown. The central values of the distribution of particles of 0.5µm diameter are about 30 for FSC and about 12 for SSC. These values are higher than the electrical noise distribution, and therefore they can be separated from the electrical noise. That is, the size of the sensitive detection is 0.5µm or less. The value of FSC is higher than the noise level between two peaks in the waveform data of FSC shown in figure 5. Therefore, in the evaluation method shown in figure 5, the detection sensitivity of a particle in droplet in oil of 100µm diameter is 0.5µm in size of a polystyrene standard particle.

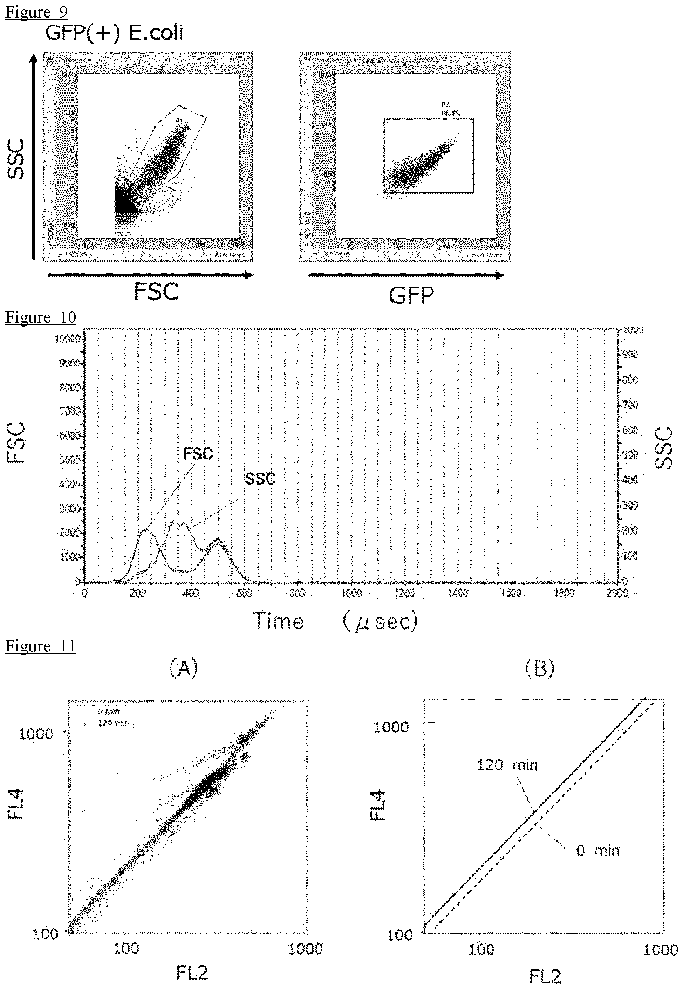

FIG. 9 is data measuring ball-shaped gel particles in which the oil was removed after growing E. coli in droplets in oil containing gel, by the conventional flow cytometry method (the intensity of the detected signal is quantified by the pulse wave height and pulse area). Specifically, E. coli, culture medium, and low-melting-point agarose were enclosed in a droplet in fluorine-based oil (30 µm in diameter), and E. coli were cultured at about 40°C (the gel was in a dissolved state) for one day. Then, the fluorine-based oil was removed to reduce the scattered light from the droplets themselves, and the intensity of scattered light from the E. coli in the gel droplets was measured. E. coli expressing GFP by genome editing were used. The particles with GFP fluorescence were selected by the fluorescence scatter plots of FL2 and FL5, and the distribution of the scatter plots of FSC and SSC were examined. Both FSC and SSC values of E. coli were distributed in the range of 10 to 500. When the oil is removed, the bacteria grown inside the gels can be detected with high sensitivity by the conventional flow cytometry detection method. However, contamination of bacteria inside the gel occurs between ball-shaped gels. To prevent this, it is necessary to detect the bacteria in oil. If the oil is not removed, as shown in Fig. 6, the scattered light intensity of the droplet itself in the oil (FSC>5000, SSC>1000) is larger than that of the bacteria growing inside (FSC<500, SSC<500), and thus the detection by the conventional flow cytometry detection method is not possible. The scattered light of the droplet itself is distinguished from the scattered light inside the droplet by measuring the waveform of the scattered light signal of a droplet in oil, and whereby the growth of bacteria can be detected without staining.
FIG. 10 is a graph showing the FSC signal waveform and SSC signal waveform of a droplet in fluorine-based oil with a particle size of 30 µm. The flow rate is the same as that shown in Figure 6. The FSC signal waveform has two peaks, e.g. the first and the last. However, the SSC signal waveform shows two waveforms, e.g. one at the center and the other at the end. unlike the two signal waveforms in Figure 6. This SSC waveform can be explained by the reflected light shown in Figure 2. That is, the beam width of the laser illumination light covers the entire droplet diameter, and therefore the illumination light is reflected in the direction of the side scattering detection. Therefore, the SSC is maximum when the laser beam is illuminated at the center of the droplet. Accordingly, in the method of detecting particles inside a droplet by scattered light, it is preferable to detect the particles in the time region (T2) where the noise between the two FSC signal waveforms is low. When the droplet size is large (e.g., 100 µm in diameter), the sensitivity of FSC detection inside the droplet is 0.5 µm or less in size. However, when the droplet size is small (e.g., 30µm), the sensitivity of FSC detection inside the droplet decreases. Therefore, although not limited, when detecting particles in the droplet using scattered light, larger droplet size is desirable to increase the detection sensitivity.
FIG. 11 is graphs showing data obtained by detecting the change in pH of droplet by the change in fluorescence. It is known that the growth of E. coli in a droplet causes a change in the pH of the external liquid. The graph (A) shows the fluorescence signal distribution of pH indicator (FL2 vs. FL4) at two different incubation times of E. coli in droplets in oil. In fact, there are two kinds of linear distributions with different color dots at different incubation times, but the difference between them is not clear in the monochrome dot display. Therefore, straight lines are shown in the graph (B). The change of fluorescence spectrum with pH is observed as a shift of the linear distribution. Next, the reason why fluorescent particles with the same fluorescence spectrum have a linear distribution, is explained.
   The particles emitting fluorescence whose fluorescence spectra are represented by the equation FL2/FL4=A, were detected, and then the distribution of fluorescence signal intensity on a logarithmic scale is shown. Considering the two-dimensional distribution of FL2 and FL4 on the logarithmic scale axis, the above equation becomes linear as Log(FL2)=Log(FL4)+Log(A). The difference in fluorescence spectra is the difference in Log(A), which explains that the pH change is observed in the shift of the straight line.

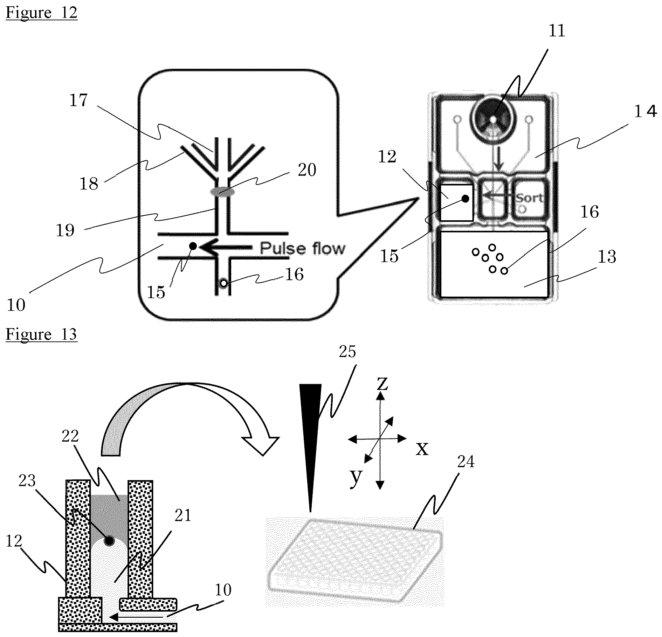

FIG. 12 is the schematic diagram showing the micro flow path chip structure for sorting droplets in oil. The micro flow path chip for sorting droplets in oil has the structure wherein a sample liquid reservoir (11), a sheath liquid reservoir (14), a collection reservoir (12), and a discharged liquid reservoir (13) are connected by micro-flow paths. When sorting droplets in fluorine-based oil, the same fluorine-based oil is used as the sheath liquid.
FIG. 13 is a diagram showing the dispensing of droplets from the collection reservoir after sorting droplets in fluorine-based oil. When the collection reservoir is filled with fluorine oil and mineral oil in advance, the mineral oil floats on top of the fluorine oil, and the interface therebetween become dome-shaped with an upward convex shape. The specific gravity of the droplet is almost equal to that of water, smaller than that of fluorine oil and larger than that of mineral oil, and thus the droplet is trapped in the ceiling at the center of the dome-shaped interface. Therefore, one droplet can be dispensed into a multiwell plate by aspirating one droplet together with mineral oil and fluorinated oil using a pipette. Each sorting one droplet can be dispensed into different wells of the multi-well plate sequentially. The control of adding the mechanical operation of pipetting from the collection reservoir to the multi-well plates after sorting is performed via a programmable controller (PLC) as shown in the block diagram in Figure 20.

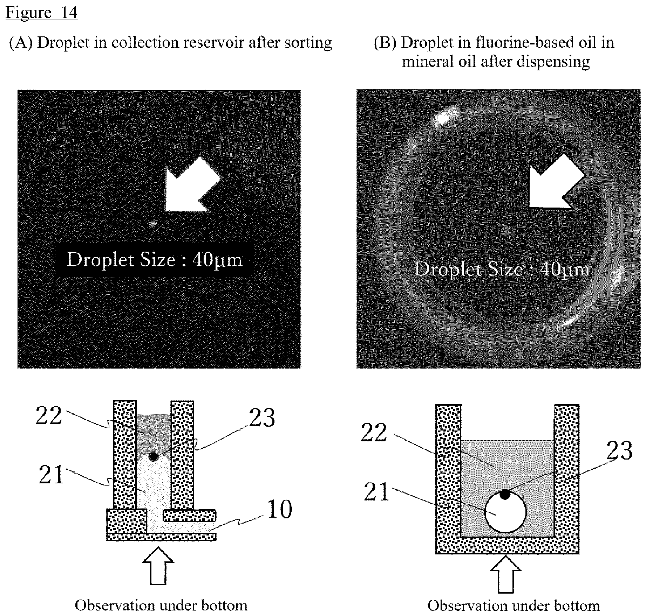

FIG. 14 is a schematic diagram of a trapped droplet in a collection reservoir and photograph of a droplet (A), and schematic diagram of a droplet after being pipetted from a collection reservoir and being dispensed into multi-wells and photograph of a droplet (B). In both photographs, the droplets contain fluorescent dyes and can be identified by fluorescence in the oil. Each photograph was taken from the bottom of the well. The droplets in the wells after dispensing are spheres of fluorine oil in mineral oil, with droplets on the top of the spheres.

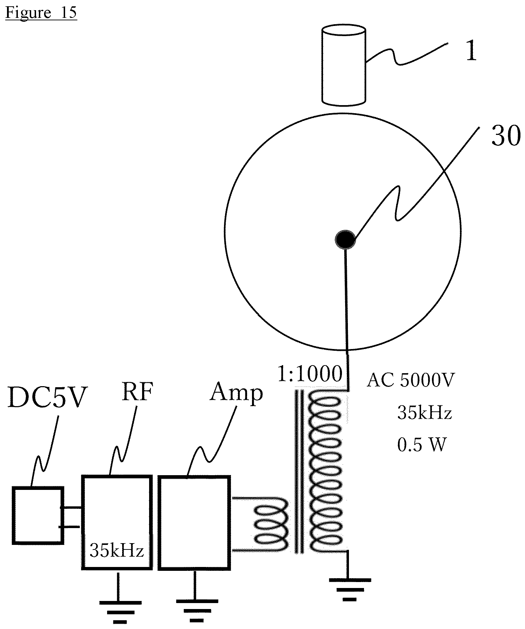

FIG. 15 is a diagram showing the structure of a long-wave irradiation transmitting electrode for the destruction of droplets in fluorine based oil. A transmitter circuit with a frequency of 35 kHz is connected to a DC power supply of 5 VDC to provide 1000-fold AC amplification. One electrode end is connected to the ground, and the other is used as the transmitting electrode for long wave irradiation. The current is 1A or less and the output power is 1W or less. The frequency of 35 kHz belongs to the long wave range of frequencies from 30 kHz to 300 kHz. In this long wave irradiation process for droplet destruction, a group of droplets in fluorine based oil is placed in a resin container at a distance of a few centimeters from the emitting electrode. When the power is turned on, the droplets in fluorine based oil are destroyed in about 10 seconds, and the oil layer and the liquid layer are separated. There exists an electromagnetic cooker with a frequency of 10 kHz, which is close to this frequency, and is called an IH cooker.
   These cookers generate heat by absorbing energy from metals containing magnetic atoms, and cookers with power outputs of 1000 W or higher are common. In contrast, the electrode structure of the present invention requires 1W or less and does not require a metal to be heated to a high temperature.
   That is, it is not based on the principle of destroying droplets by heat generation. There is no cellular damage caused by heat generation, and thus the recovered E. coli cultured in the droplet can grow. Therefore, it is considered that the cell damage caused by the droplet destruction process is negligible.

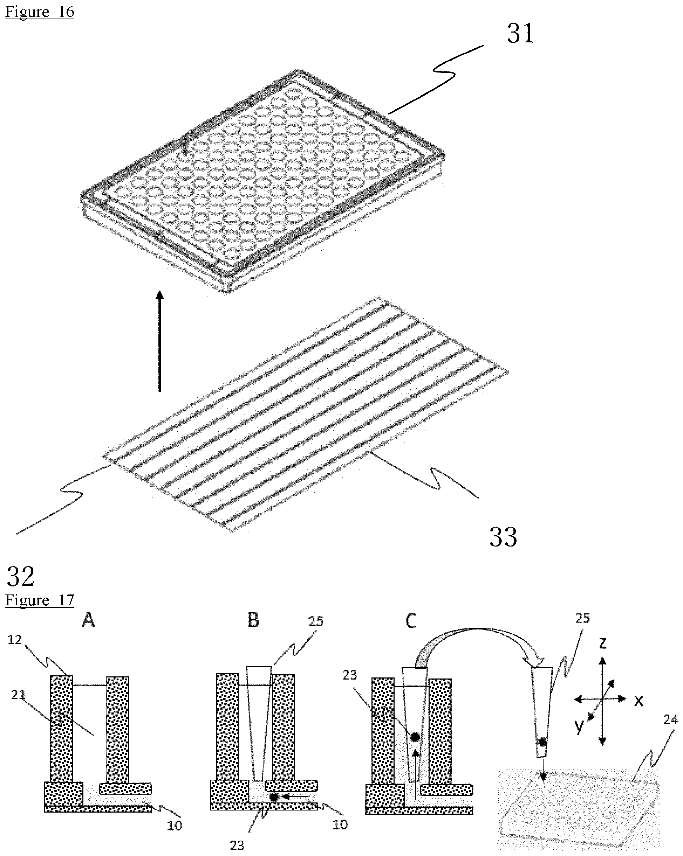

FIG. 16 is a diagram showing structure of a device for destroying droplets in fluorine based oil dispensed into a multi-plate. The device destroys droplets in each well at a time, by placing long-wave transmitting electrodes at the bottom of each well in the plate. The electrodes are arranged by forming a metal line pattern within the resin along the rows of wells. Each electrode can be placed on the bottom of the plate while remaining conductive.
FIG. 17 is a diagram showing a method of sorting droplets into a pipette by placing a dispensing pipette above the position where the droplets float in the collection reservoir, in contrast to the method of dispensing droplets using mineral oil shown in Figure 13. The fluorine oil is added to the collection reservoir in advance (A), and then the sorted droplet flows out from the restrained floating state at the top of the collection flow path and floats up at the position where the droplet enters the collection reservoir. The floating position of the sorted droplet is fixed, and a dispensing pipette is kept at the upper part of the floating position (B). The aperture size of the dispensing pipette is about four times larger than the droplet size of 100 micrometers. The time from sorting the droplet to entering the droplet into the dispensing pipette is fixed. After the droplets enter the pipette, the pipette is moved from the collection reservoir to the wells of the multi-well plate to which the droplets are dispensed, one by one, and then the pipette is returned to the collection reservoir to wait again.

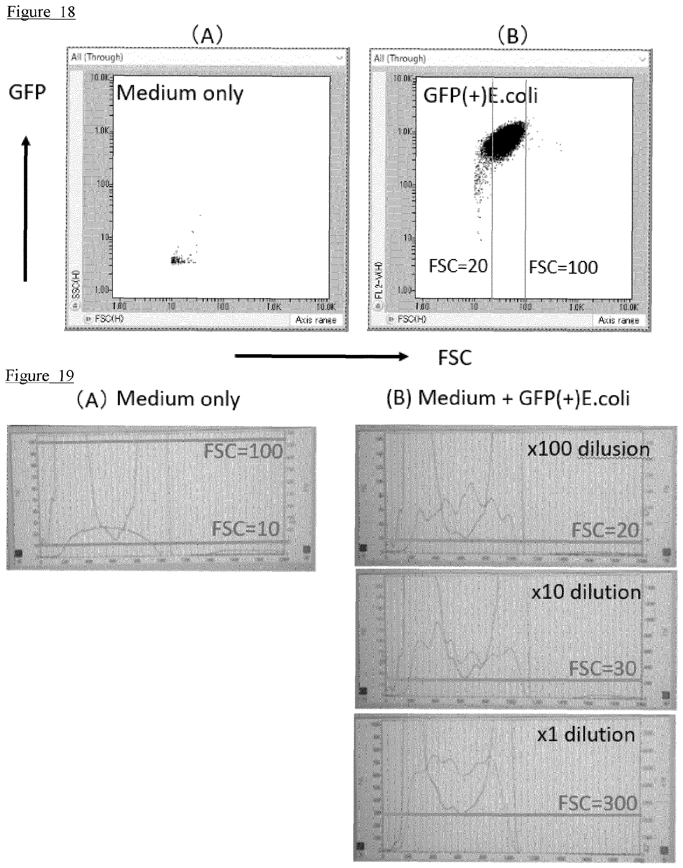

FIG. 18 is plots showing the data of flow cytometry measurement of E. coli in the solution of medium (signal intensity of each individual bacterium). The plot (A) is the data of LB medium only, and the plot (B) is the data of detection of GFP-expressing E. coli in LB medium. The E. coli were cultured in LB medium under the shaking condition at 37°C for 12 hours. At the time of measurement, the bacteria solution after culture was diluted 10-fold in LB medium. The data shows the distribution of FSC signal intensity of individual E. coli, which is approximately in the range of 20 to 100.
FIG. 19 is graphs showing the data confirming whether E. coli bacteria in a droplet of fluorine based oil can be detected by measuring the waveform of scattered light signals. In the graph (A), only culture medium is contained in the droplet. The minimum value of the FSC signal intensity at the center of the droplet is about 10. This value is consistent with the minimum value of 10 for the medium only in Figure 18(A). The autofluorescence of the culture medium is detected by the FL2 detection channel for GFP fluorescence signal detection. The culture medium of E. coli is LB medium. This medium contains various nutrients, and thus it may have such autofluorescence. The region of autofluorescence in this medium indicates the droplet region, which corresponds to the region between two peaks with very high FSC signals corresponding to the contour positions at both ends of the droplet. Figure 19(B) shows the results of the detection of E. coli in a droplet in fluorine oil by measuring the waveform of scattered light signals. The original solution of the cultured bacterial liquid was designated as ×1 dilution, the 10-fold dilution was designated as ×10 dilution, and the 100-fold dilution was designated as x100 dilution. The possibility of detecting bacteria can be determined by the relationship between the three types of bacterial density due to dilution and the FSC value in the droplet. As a simple example of quantifying FSC in the droplet, the dependency of the minimum value (FSCmini) on bacterial density is FSCmini = 300 for the original solution, FSCmini = 30 for the 10-fold dilution, and FSCmini = 20 for the 100-fold dilution. The value of FSCmini for the 10-fold dilution corresponds to about the median value of FSC signal intensity of one E. coli in Figure 18(B). Furthermore, the level of GFP signal intensity in the droplet of 10-fold dilution fluctuates around 400, which corresponds to the GFP fluorescence intensity of about one E. coli from the GFP signal intensity of E. coli in Fig. 18(B). That is to say, there is about one E. coli in the 20 µm width of the laser beam area, while multiple E. coli exist in the laser beam in the original solution. GFP is not expressed by normal bacteria, and thus it is used only as a reference for the evaluation of detection performance in this time.
FIG. 20 is a wiring block diagram of the device of the present invention with droplet sorting function and dispensing functions. Detection signals from multiple photodetectors of droplets are processed by a CPU together with high-speed calculations by an FPGA in an AD circuit board that performs AD conversion. The CPU is also connected to a programmable controller (PLC), which controls the position sensors and electric motors related to the mechanical operation. The PLC is also used to control the pneumatic pumps that control the flow rate of the liquid in the flow paths and the electromagnetic valves for sorting. The dispensing operation by mechanical motion in conjunction with the sorting is also controlled by using the PLC. The system of the device is operated by a notebook PC connected to the CPU in the system by a LAN cable. The measurement results are output on the screen of the notebook PC, and the measurement data are recorded in the notebook PC's memory. The measured data are the number of detected droplets, the number of sorting pulses, the scattered light signal intensities in two directions (FSC, SSC), the fluorescent signal intensities in six colors (FL1,2,3,4,5,5) and the internal signal intensity of each individual droplet (the time domain set from the waveform observation of each droplet). The types of the signal intensity inside the droplet are selected from FSC, SSC, FL1, FL2, FL3, FL4, FL5, and FL6. In Figure 19, FSC is selected as the signal inside the droplet. The reason for this is as follows. The scattered light must be selected because the droplet is unstained. If SSC is selected, the scattered light signal from the droplet itself and the scattered light inside the droplet are at the same level, and thus they cannot be distinguished. Thus, FSC is the best choice. This is the above reason why FSC is selected in Figure 19.

### DESCRIPTION OF EMBODIMENTS

The present inventor has noticed the following problems in the detection of particles in a droplet (water in oil).

In the method of inclusion of particles in droplets in oil, a sample liquid with adjusted particle concentration and oil are merged in a micro flow path to form a droplet in oil. During the formation of the droplet in oil, particles in the sample liquid are accidentally incorporated into the droplet. Therefore, the distribution of the number of particles in an individual droplet in oil follows a Poisson distribution. In single particle screening, it is necessary to avoid the inclusion of multiple particles in a single droplet. Therefore, it is necessary to form droplets with the number of particles more than 10 times larger than the number of particles according to the Poisson distribution. That is to say, in this method, the number of droplets in the oil that do not contain particles is at least 10 times the number of particles. Therefore, in order to highly improve the efficiency of the screening method using droplets in oil, it is necessary to identify and separate only the droplets in oil that contain particles.

There are two methods for detecting droplets in oil containing particles, e.g. a method of unstained detection of particles and a method of fluorescence detection of particles.

In the case of unstained detection of particles in droplets in oil, it is preferable to select a single particle and then propagate it, in order to screen the particles of interest with high purity. In order to propagate the particles, it is desirable to identify them at high speed without staining, which causes less damage to the cells. Flow cytometry is a suitable technique for the rapid identification and analysis of a large number of particles. However, flow cytometry is not suitable for the analysis of droplets in oil. This is because the strong scattered light generated at the interface between the oil and the droplet is an obstacle for the detection of the scattered light derived from the particles inside the droplet. That is to say, it is considered to be impossible to detect particles whose signals are smaller than the scattered light signal intensity of the droplet itself. Thus, it is impossible to detect a single cell of about 10 µm in a droplet of about 100 µm in diameter or a single bacterium of about 1 µm in diameter. This is because the signal intensity is often smaller than the scattered light intensity of the droplet itself. The method of identifying a droplet containing cells without staining is ideal from the viewpoint of damage to the cells, compared to the method of staining cells. As mentioned above, however, the presence of scattered light from the droplet itself is a major obstacle to the detection of particles.

As mentioned above, in order to screen particles of interest with high purity, it is preferable to select a single particle and then propagate it. In the case of fluorescent staining of cells, there is a possibility of damaging the cells due to the adsorption of the dye molecules on the cells. Therefore, the following methods are known to detect cells in oil droplets by using the fluorescence of fluorescent dye molecules that are not adsorbed on cells. In non-patent literature 1, flow cytometry is used to detect cells by fluorescent labeling of special secretions of cell with a special FRET probe. However, this method is not versatile enough to be applied to unknown particles. In the patent literature 2 and non-patent literature 2, droplets in oil containing bacteria are detected by fluorescent labeling of ribonuclease secreted by the bacteria with FNAP probes. This method may lead to the false detection of bacteria if the medium which is contained in the droplet is contaminated with ribonucleases, even if bacteria are not present in the droplet in oil.

### [1] Method for detecting particle in droplet in oil, and device for detecting particles in droplet in oil

The method for detecting a particle in droplet of the present invention is a method for detecting a particle in a droplet (water in oil) by illuminating light in the flow path to particles contained in the droplet, and detecting change on time in the intensity of light signals from the particles. By measuring the change on time of the light signal intensity of the scattered light from the droplet and the scattered light from the particles, the particles can be detected.

That is to say, particles in a droplet are detected optically by illuminating light while the droplet in oil (water in oil) is flowing in a flow path. The detection of particles in a droplet with a signal intensity smaller than that of the droplet is performed as follows. The signal waveforms of the scattered light (forward scattered light or side scattered light) are measured and the time of occurrence of the scattered light signal of the droplet is distinguished from that of the particles in the droplet, and thereby, in the range of time when the signal of the droplet does not occur, the particles inside the droplet can be detected.

In the method for detecting a particle in droplet of the present invention, the technique of sorting droplets in oil using micro flow paths can be used without limitation. For example, droplets in oil containing particles can be formed by flowing fluorine based oil in the micro flow chip from both sides of the flow path of the sample liquid containing particles or the like. The droplet containing particles and the droplet without particles can be distinguished and detected, by illuminating the droplet in oil containing particles with laser light in the light-illuminated region and detecting the scattered light of the droplet and particles.

When the geometrical optical approximation holds, the generation of scattered light derived from a droplet in oil will be explained, assuming that the size of the droplet in oil is in the range of several 10 to several 100 micrometers, which is sufficiently longer than the wavelength of the illumination light.

Figure 1 shows the transmission of light ray 2 of the illumination light when a droplet in oil is illuminated. A glass sphere in air (with an external refractive index of 1.0 and a glass refractive index of 1.4) is used as a ball lens, in a similar manner, a droplet in fluorinated oil converges the light. The refractive index of fluorinated oil is about 1.3, and that of water is 1.33. Therefore, a spherical droplet with a refractive index of 1.33 in an environment with a refractive index of 1.3 can be considered as a ball lens that converges light.

Figure 2 shows the reflected light when a droplet in oil is illuminated with light 2. The light ray illuminated at a normal extending from the center of the droplet at 45 degrees to the droplet surface is reflected 90 degrees to the side of the droplet. This reflection is called side scattering.

Next, the changes of transmitted light and reflected light from the droplet in oil will be explained when the droplet in oil is moved in a flow path.

Figure 3 shows the change on time in the case of illuminating light 2 to the droplet in oil1 flowing in the path from the top. If T=0 is the time when the illumination laser light passes through the center of the droplet, the direct transmitted light of the light does not enter the photodetector 6, which is installed after the focusing lens 4 for detection, because it is blocked by the light shield plate 5. However, if the illumination light 2 enters a position deviated from the center of the droplet due to the movement of the droplet (before and after T=0, i.e., when T=-A and T=+A), the transmitted light is deviated from the light shield 5 and enters the photodetector 6. Therefore, when the forward scattered light signal intensity (FSC) is detected with the transmitted light blocked, the transmitted light intensity of the illumination light is superimposed on the FSC signal of the droplet in the oil as the FSC value of the droplet.

In this case, the waveform of change on time of the detector's signal intensity is schematically shown in Figure 4. Figure 4 shows the signal waveforms where the vertical axis is the signal strength (FSC) in the forward direction and the horizontal axis is time. Two moments of high intensity occur. This means that the signal of the FSC detector increases twice, because the moment when the transmitted light is shifted from the light shield shown in Figure 3 occurs twice. That is, the FSC signal of one droplet in oil has two peaks, and the time interval between the peaks is determined by the size and flow rate of the droplet in oil.

Between the two peaks, there exists a region of low signal intensity. In this region of low signal intensity, scattered light signals generated by particles such as cells in the droplet can be detected. For example, the method to quantify the signal intensity of particles in a droplet between the two peaks can be performed, as follows. A detection threshold (Th) to detect the FSC peak value of a droplet is set, and the signal waveform with a time width T2 is measured after the elapse of time T1 from the detection of Th. By quantifying the maximum value of the waveform data or the area of the signal intensity of the waveform data of the time T2, the scattered light intensity of particles in the droplet can be detected.

In the present invention, by detecting the light scattered by particles in the range of T2, droplets containing particles can be distinguished from those without particles. For example, as shown in Figure 8, the forward scattered light (FSC) derived from particles is about 30 and the side scattered light (SSC) is about 15, for a particle of 0.5µm. For a particle of 1µm, the forward scattering coefficient (FSC) is about 400 and the side scattering coefficient (SSC) is about 200. Therefore, the possibility of detection of the scattered light of particles in the time range of T2 can be judged as follows. That is, if the scattered light signal intensity of the droplet itself is larger than the signal intensity in the range of T2, it is judged that the detection is possible. The intensity of the scattered light of the droplet itself depends on the droplet size. According to the scattered light intensity data of droplet size 100µm shown in Figure 6 and the scattered light intensity data of droplet size 30µm shown in Figure 10, it can be concluded that a droplet size of 100µm can be used to detect internal particles with an size of about 0.5µm.

### <<Scattered light>>

Scattered light used in the method for detecting a particle in droplet of the present invention is not particularly limited, but there may be mentioned a forward scattered light or a side scattered light. As shown in Example 1, the forward scattering light (FSC) or the side scattering light (SSC) derived from a droplet has a time region (e.g., T2) of low scattered light intensity between the first peak and the second peak (Figure 6A, B). Therefore, the scattered light derived from particles in the droplet can be detected in this low scattered light region of the droplet.

### <Measurement of scattered light

Scattered light derived from particles can be measured as shown in Figure 4. For example, by adjusting the flow rate and velocity of the oil and the sample liquid containing particles flowing through the flow path of the micro flow path chip, the particle size of the droplets in oil can be adjusted to a certain size. When the particle size of the droplets in oil is constant, the size of the two peaks of each droplet in oil and the interval between the two peaks are the same. Therefore, the detection threshold (Th) is set to detect the first peak, and the time from the detection of Th to the beginning of the time region of low scattered light intensity between the first peak and the second peak is set as T1. Then, the time region of low scattered light intensity is set as T2. By measuring the scattered light intensity in the T2 region, the scattered light derived from particles in the droplet can be measured.

The device for detecting a particle in droplet of the present invention can include a program that records the waveform data of change on time of the scattered light intensity and analyzes the scattered light intensity inside the droplet from the waveform data.

### «Droplet (water in oil)»

The droplet in oil (water in oil) is not particularly limited, as long as the effect of the present invention can be achieved, it can be made by conventional methods. The particle size of the droplets in oil is also not limited, but is, for example, between 30 and 170 µm. The lower limit is not particularly limited, but is 40 µm or more, preferably 50 µm or more, more preferably 60 µm or more, even more preferably 70 µm or more, and even more preferably 80 µm or more. The upper limit is not particularly limited, but is, for example, 170 µm or less, preferably 160 µm or less, more preferably 150 µm or less, even more preferably 140 µm or less, and even more preferably 130 µm or less. The above upper and lower limits can be combined arbitrarily.

Fluorine based oils used for droplet formation in the present invention are not particularly limited, but commercially available products such as NOVEC 7500, a fluorinated oil, manufactured by 3M Co.

### «Particles»

Particles contained in the droplets of the present invention are not limited as long as they generate scattered light, but for example, there may be mentioned cells (e.g., animal cells, plant cells, bacterial cells, fungal cells, etc.).

Particle size is not limited as long as the particles can be contained in the droplet, but the lower limit is, for example, 0.3 µm or more, preferably 0.4 µm or more, and even more preferably 0.5 µm or more. The upper limit is, for example, 20 µm or less, preferably 18 µm or less, more preferably 16 µm or less, even more preferably 16 µm or less, and even more preferably 14 µm or less. The lower and upper limits can be arbitrarily combined.

### « Light source »

The light source of light with one direction which illuminates droplets and particles is not limited as long as it can generate scattered light, for example, there may be mentioned laser beam or LED light. Laser light, which is a light with one direction with high illumination density, is ideal. The illumination beam shape is preferably elliptical or rectangular, and the shorter the short-axis size, the better. This is because a narrower short-axis size is important to shorten the time width of T1 in Figure 4 and to detect a wide range of particles in a droplet. In the data shown in Figure 6, the short axis size is set to be as small as 20µm for a droplet size of 100µm. The beam is illuminated by aligning the direction of the short axis of the beam with the flow direction of the droplet. This is appropriate for high sensitivity to particles in the droplet. When measuring a droplet smaller than the size of the major axis, the SSC signal of the droplet itself becomes large at the center of the droplet as shown in Figure 10, and thus cannot be used for the detection of particles inside the droplet. On the other hand, in the case of the FSC signal, the FSC signal of the droplet itself becomes smaller at the center of the droplet regardless of the droplet size, which makes the FSC signal more appropriate for the detection of particles in the droplet.

### « Hydrogel »

The liquid contained in the droplet in oil (water in oil) used in the present invention is not particularly limited, but the liquid used for dispersing particles in ordinary sorting can be used without limitation. Specifically, PBS solution or cell culture medium can be used.

In the present invention, the droplets in oil may also contain hydrogel. As the hydrogels, there may be mentioned Agarose gel and gelatin gel. By using hydrogels, bacteria can be grown locally in the droplet. The advantage of forming the hydrogel in the oil droplet is the high sensitivity in detecting the growth state of bacteria by scattered light. It is known that the amount of medium in a 100 µm sized droplet in oil is not sufficient for the growth of animal cells, and it only remain the cells alive for several days. Therefore, it is necessary to supply a medium to the cells in the gel formed in the shape of a ball by permeating the medium after the oil is removed.

### (Step of forming droplet in oil (water in oil))

The method for detecting a particle in droplet of the present invention comprises the step of forming a droplet in oil. For example, as established in a known technique (Patent literature 1), fluorine based oil can be flowed from both sides of a flow path of a sample liquid containing particles in a micro flow path chip, to form a droplet in oil containing particles. The fluorine based oils used for droplet formation in the present invention are not particularly limited, but commercially available products such as NOVEC 7500, a fluorinated oil, manufactured by 3M Co.

The step of forming droplets in oil in the present invention can be considered in two ways: one is to form a gel inside the liquid, and the other is not to form a gel. The step of forming the gel is not limited, but it may be carried out by encapsulating the particles and a liquid containing a low-melting point gel in droplets at a temperature above the melting point of the low-melting point gel and below a temperature at which the cells do not die.

The hydrogel described above can be used as the low-melting-point gel. The melting point of the low-melting-point gel is not limited as long as the effect of the present invention can be achieved, but the lower limit is 37°C or more, preferably 39°C or more, for the temperature at which cells are suspended in a dissolved state before forming the droplet. The upper limit is, for example, 40°C or less, and the temperature range should be such that no cell damage is caused.

The method for detecting a particle in droplet of the present invention comprises the step of detecting a droplet in oil. Specifically, as described above, the droplets in oil are illuminated by a laser beam in the light-illuminated region, and the droplets containing particles and those without particles can be detected separately by detecting the change on time of scattered light from the droplets and particles.

### (Step of gelating the liquid)

The method for detecting a particle in droplet of the present invention can comprise the step of gelating the liquid in the low-melting-point gel droplet. In this case, the liquid containing the low-melting-point gel can be gelated by leaving the liquid below the melting point. The temperature below the melting point includes -1°C or less, -2°C or less, -3°C or less, -4°C or less, -5°C or less, -6°C or less, -7°C or less, -8°C or less, -9°C or less, or -10°C or less of the melting point of the low melting point gel. The temperature below the melting point thereof is sufficient for gelation of the liquid.

### (Step of culturing cells)

If the particles are cells, the method may further comprise the step of culturing cells. The cells may be cultured in the liquid or in a low-melting-point gel. When culturing cells, the liquid in the droplet preferably contain a medium suitable for culturing the cells. The culture medium can be selected according to the cells. For example, the medium can be selected for animal cells, plant cells, bacterial cells, and the like.

### (Step of sorting droplets)

The method for detecting a particle in droplet of the present invention may comprise the step of collecting droplet containing the particle in a collection flow path by pulsed flow. The collection by pulsed flow is not limited, but can be performed using a pair of opposing branched flow paths connected from the side of the confluence flow path of the particle in device for detecting a particle in droplet described later.

### (Detection of cell proliferation by pH)

The proliferation of cells in the droplet can be detected by the change of pH. Preferably, the change in pH is detected by using a dye whose fluorescence spectrum changes depending on pH. The pH indicator dye (SNARF(registered trademark)-5F 5-(and-6)-carboxylic acid) manufactured by Molecular Probe, which is a commercially available pH-dependent dye, can be used as the dye. These dyes are included in a sample liquid containing particles and the droplets are formed, and then, the fluorescence spectra before and after cell proliferation in the culture medium are measured by the ratio of two fluorescence signal intensities, and pH is measured. And whereby, the proliferation of cells can be detected by changes in pH due to cell proliferation. The detection of pH changes before and after bacterial growth is illustrated in Figure 11.

In the device for detecting a particle in droplet in oil (water in oil) of the present invention, laser light is illuminated to particles contained in a droplet in oil (water in oil) in the flow path, the change on time of light signal intensity from the particles is detected, and the particles are detected by measuring scattered light from the droplet and scattered light from the particles.

The device for detecting a particle in droplet of the present invention is not limited, but it comprises a flow path chip for separating particles contained in a sample solution. In the flow path chip, the flow paths are formed in a transparent substrate, and a sample liquid reservoir which is fluidically connected with the flow path, a sheath liquid reservoir, a sorting reservoir, a collection reservoir, and a discharged liquid reservoir are formed therein, and the flow of the fluid in the flow path is controlled by the air pressure above each reservoir. The flow path chip has a confluence flow path where the introduction flow path from the sample liquid reservoir and a pair of sheath liquid introduction flow paths located on both sides join. It has a light-illuminated region for detecting particles downstream of the confluence flow path, a pair of opposing branch flow paths connected from the side of the confluence flow path further downstream of the confluence flow path. One of the pair of branched flow paths is connected to a sorting reservoir, and the other of the branched flow paths is connected to the collection reservoir. Further, the upper part of the collection reservoir is releasable at atmospheric pressure, and the sample liquid reservoir is releasable at atmospheric pressure.

It is not limited, but in Figure 12, an example of a micro flow path chip structure for sorting droplet in oil. The micro flow path chip for sorting droplet in oil has a structure wherein a sample liquid reservoir (11), a sheath liquid reservoir (14), a collection reservoir (12), and a discharged liquid reservoir (13) are connected by micro flow paths. When sorting droplets in the fluorinated oil, fluorinated oil is used as the sheath liquid. Sorting can also be performed as shown in Figure 12. That is, droplets are flowed in the micro flow path with oil as the sheath fluid, and the flowing droplets are illuminated with a laser beam. The scattered light signals and fluorescent signals from the droplet are detected, and then a pulse flow is generated perpendicular for droplets in which cell is detected therewithin, and the droplet is collected in the collection flow path. Each droplet containing cell can be sorted into the collection reservoir.

### [2] Method for dispensing droplets in oil (water in oil)

Fluorine based oil is generally used in order to form stable droplets in oil. Since the specific gravity of fluorinated oil is larger than that of water, droplets float on the top surface in oil. Moreover, in a resin container, droplets of fluorinated oil tend to move and adhere to the wall of the container above. Therefore, the droplet floating on the fluorinated oil is adhered on the wall surface, and thus it is practically impossible to suck a single droplet by the pipette and dispense by discharging.

Figure 13 shows the dispensing of droplets from a collection reservoir after sorting droplets in fluorinated oil. When the collection reservoir is filled with fluorinated oil and mineral oil in advance, the mineral oil floats on top of the fluorinated oil, and the interface therebetween is convex and dome-shaped. The specific gravity of the droplet is almost equal to that of water, smaller than that of fluorinated oil and larger than that of mineral oil, and therefore the droplet is trapped in the ceiling at the center of the dome-shaped interface. Therefore, one droplet can be dispensed into a multiwell plate by aspirating one droplet together with mineral oil and fluorinated oil by the pipette. By each sorting of one droplet, it can be sequentially dispensed into different wells of the multi-well plate.

Figure 17 shows a method that does not use mineral oil. A dispensing pipette is placed in a collection reservoir filled with fluorine oil in advance, and it is kept at the position where the droplet floats. During the droplets in the fluorine oil rise from the collection flow path, they are taken into the dispensing pipette one by one, and then the dispensing pipette is pulled up to dispense the droplets one by one into each well of a multi-well plate. After dispensing, the pipette is returned to the collection reservoir again, and the pipette is kept at the position where the droplet floats. After capturing the droplets, the dispensing into the multi-well plate is repeated again. The rate limiting factor for the dispensing speed per unit time is the time required for the mechanical reciprocating motion of the dispensing pipette between the collection reservoir and the multi-well plate. Next, the timing from droplet sorting to the dispensing of droplets is described. Regarding the method for sorting droplets in oil used in the present invention, a droplet sorting technology described in detail in WO2011086990A1 (Patent literature 6) is employed, which is related to the sorting principle and filed by our company. In this method, the particles of interest are sorted into the collection flow path by using the pulse flow of oil derived from the air pressure pulses generated by the electromagnetic valve connected to the constant air pump wherein the pulse flow is generated by a short period of time in the open state in the always closed state. The pulse flow shown in Figure 12 is generated based on this principle. Regarding the timing for generating the sorting pulse flow, the pulse flow is generated when the droplet of interest is detected in the laser illumination region (detection region) shown in Figure 12. Therefore, it is necessary to flow droplets at time intervals shorter than the dispensing speed, and at a high frequency. Since droplets float in fluorine oil, it is impossible to control the frequency of flow even by dilution with oil. In order to control the frequency, the sorting frequency can be reduced by mixing sample droplets with blank droplets that are not to be sorted. By reducing the frequency to the dispensing speed or less, it is prevented that the droplets enter before the dispensing pipette returns to the collection reservoir.

### [3] Method and apparatus for collecting cells from inside of a droplet in oil

In the method for collecting cells from inside of the droplet in oil, it is important to avoid damaging the cells inside the droplet. The destruction of droplets by ultrasonic treatment as described in Patent literature 10, chemical treatment as described in Patent literature 13, and microwave treatment at a frequency that increases the water temperature as described in Patent literature 12 are undesirable because they may damage cells. In addition, the method using a hand-held ionizer gun described in Non-Patent literature 4 is a manual method, and thus the reproducibility required for the destruction of droplet groups in oil dispensed into a multi-well plate is a problem. In the methods described in Patent literature 9 and Patent literature 11, the distance between the electrodes should be varied according to the amount of droplets in oil, since the droplets are placed between the electrodes.

The method for collecting particles from inside of a droplet in oil of the present invention comprises the step of destroying the droplets by applying electromagnetic waves to the droplets in oil containing two or more particles. As another embodiment of the method of for collecting particles from inside of a droplet in oil of the present invention comprises the step of adding droplet(s) in oil containing no particle to droplet(s) in oil containing a particle, and fusing and destroying the droplets by applying electromagnetic waves to the group of droplets in oil. The number of the droplets in oil containing no particle is not limited, but one or more is sufficient, preferably two or more, more preferably three or more. The action of electromagnetic waves on the droplets in oil can be performed in the wells of a multi-well plate, although it is not limited. The action of electromagnetic waves on said droplets in oil can be, but is not limited to, carried out in the wells of a multiwell plate. The action of electromagnetic waves on the droplets in the oil can be performed, but is not limited to, by applying a high-frequency electric field to an electrode pattern placed under the plate at the bottom of the well to generate electromagnetic waves, and irradiating the inside of the well with the electromagnetic waves. In this case, it is not necessary to sandwich the droplet between the electrodes, but it is necessary to have a large number of empty droplets adjacent to a single droplet to be destroyed. The fusion of many neighboring droplets by high-frequency electromagnetic waves causes the cells in the droplet to be destroyed to come out of the droplet by fusion. A large number of adjacent droplets are fused together by high-frequency electromagnetic waves, and whereby the cells inside the droplets to be destroyed, are expelled by fusion.

Figure 15 shows the structure of an irradiating transmitting electrode of electromagnetic waves in the long wave region for the destruction of a droplet to extract cells from a droplet in fluorinated oil. A transmitter circuit with a frequency of 35 kHz is connected to a DC power supply of 5 V DC to provide 1000-fold AC amplification. One electrode end is connected to the ground, and the other transmitting electrode is used for long-wave transmission. The current is 1A or less and the output power is 1W or less. The frequency of 35 kHz belongs to the long wave range of frequencies from 30 kHz to 300 kHz. In this long wave irradiation process for droplet destruction, a group of droplets in fluorinated oil is placed in a resin container at a distance of a few centimeters from the emitting electrode. When the power is turned on, the droplets in fluorinated oil are destroyed in about 10 seconds, and the oil layer and the liquid layer are separated.

In the present invention, it is not necessary to place the droplets between electrodes, and they can be destroyed by irradiating an empty droplet adjacent to the droplet to be destroyed with electromagnetic waves at 1 W or less. The method of the present invention does not cause cell damage due to heat generation, and thus the recovered E. coli can grow after the droplet is destroyed by the method of the present invention.

Figure 16 shows the structure of a device for destroying droplets in fluorinated oil dispensed into a multiwell-plate. The device destroys droplets in each well at a time, by placing long-wave transmitting electrodes at the bottom of each well in the plate. The electrodes are arranged by forming a metal line pattern within the resin along the rows of wells. Each electrode can be placed on the bottom of the plate while remaining conductive. When using a 384-multiwell plate, multiple empty droplets are dispensed into each well before the dispensing of droplets containing cells by the method of the present invention. After that, a high-frequency electric field is applied to the electrodes to generate electromagnetic waves, and the droplets in a well are fused together by droplet disruption, and the cells in the droplets are extracted into the liquid phase generated by the fusion.

### EXAMPLES

The present invention now will be further illustrated by, but is by no means limited to, the following Examples.

### «Example 1 »

In this example, the FSC signal waveform of a droplet in fluorine based oil with a diameter of 100 µm was measured (Figure 5). As shown in Figure 4, two peaks were detected from the droplet in the oil. Figure 5 shows the waveform of the fluorescence signal (FL2) measured at the same time. This fluorescence is derived from the FITC dye contained in droplet in oil. The light signal inside the droplet can be detected between the two FSC signal peaks. In particular, since the noise of the scattered light between the two peaks is very small, the scattered light signal of particles can be detected in this time region. That is, the scattered light signal of cells inside the droplet which is higher than the noise of the scattered light signal intensity of the droplet, can be detected. While the value of two peaks of FSC are 500 to 600, the noise level of the signal in the time width of 1800µsec between the peaks is less than 10. Therefore, the particle signal which is about 1/500 of the scattered light signal of the droplet itself, can be detected. In order to quantify the signal intensity between two peaks, the detection threshold (Th) is set to detect the FSC peak value of the droplet, the signal waveform is measured from the time T1 after the detection to the time width T2, and the maximum value of the waveform data and the sum of the signal intensities of the waveform data during the period are recorded. The parameters Tl and T2 are set in correspondence with the droplet size and flow rate. As an example of the parameters corresponding to the waveform data shown in Figure 5, when Th=500, T1=400µsec, and T2=1200µsec are set, the scattered light derived from cells in a droplet can be detected with high sensitivity without being affected by the scattered light from the droplet itself.

### «Example2»

In this example, FSC signal waveforms were measured by forming the gel in the droplet in oil (Figure 6). That is, a droplet containing PBS without gel (Figure 6A) and a gel formed droplet containing 1.5% agarose gel (Figure 6B) were prepared. As shown in Figure 6, the intensity of scattered light signals from the droplets hardly changed between the condition with agarose gel formed inside the droplet and that with PBS inside the droplet.

When bacteria are grown inside the droplet using agarose, they grow locally. The growth area has a different refractive index from that of the agarose gel, and thus generates a large amount of scattered light. Therefore, the signal intensity of bacterial cells can be increased by using the gel.

In addition, in the case that animal cells are encapsulated in a droplet for a long time, if the cells are planktonic, they can be cultured within the amount of medium in the droplet. However, epithelial cells, which constitute organs, are adhesive cells and cannot survive without a scaffold with which they can contact. Extracellular matrix and collagen are known as scaffold materials. Therefore, in the case of long-term survival of adherent cells in a droplet, collagen-derived gelatin gel can be used as a gel formed in the droplet to maintain animal cells for a long period of time.

In the method of forming a gel ball in a droplet in oil described in Patent literature 8, bacteria in the gel ball are detected by removing the oil after the droplet is formed and cultured by gelation inside the droplet, thereby eliminating the generation of strongly scattered light in the droplet itself. This method has a risk that bacteria grown near the surface of the gel ball may be released to the external liquid when the oil is removed. The risk of mixing with bacteria in other droplets is a fundamental problem in single-cell assays. This example can solve this problem.

### <<Example3>>

In this example, E. coli bacteria were encapsulated in a droplet in fluorine based oil, and the growth of E. coli bacteria was detected by using a pH indicator dye.

Specifically, the change in the fluorescence spectrum of the pH indicator dye in the droplet due to a change in pH was detected as follows. While flowing the droplets in oil in the flow path, they were illuminated with laser light of a wavelength in the absorption band of the pH indicator dye. Then, the fluorescence intensity from the droplets was measured in two different wavelength ranges, and the intensity ratio thereof was calculated.

The ratio between the two fluorescent signals was measured for the droplets in which bacteria were growing. The droplets that satisfied the ratio condition of the growing signals were sorted. Even when the ratio between the two fluorescent signals was not measured, a two-dimensional scatter plot of the two fluorescent signal intensities on a logarithmic scale was prepared. The distribution of the two fluorescent signals is distributed on a straight line, and the Y-axis intercept of the line indicates the signal intensity ratio determined by the fluorescence spectra. Therefore, the change of the fluorescence spectrum can be detected by the shift of the Y-axis intercept with the incubation time.

A pH indicator dye (SNARF(registered trademark)-5F 5-(and-6)-carboxylic acid) manufactured by Molecular Probe, Inc. was incorporated with LB medium at a concentration of one E. coli on average in one droplet of oil of 40 µm diameter. Figure 9 shows two-dimensional scatter plots of fluorescence detection channels FL4 (673 nm ± 19 nm) and FL2 (543 nm ± 11 nm) detected by 488-nm laser excitation immediately after and 120 minutes after the inclusion. Due to the characteristics of the pH indicator dye, the pH shifted toward higher values after 120 min.

According to Non-Patent literature 5, the pH of ordinary culture media changes with the growth of bacteria. In Non-Patent literature 5, pH is measured by using a dye whose fluorescence spectrum changes with pH. By using this method for the measurement of pH change in a droplet, it is possible to detect the presence or absence of growth of bacteria enclosed in each droplet. For example, it is possible to detect the growth of bacteria by using the probes described in Non-Patent literature 1. However, in the case that the components of the environmental soil are used as the medium in the droplet, if RNA-degrading enzymes which are secreted by the bacteria is present in the soil, the fluorescence occurs and leads to false detection. According to the method of detecting pH change in the present example, there is no risk of false detection.

### «Example4»

In this example, the droplets in oil were sorted and dispensed.

Figure 12 shows the micro flow path chip structure for sorting droplets in oil. In the micro flow path chip for sorting droplets in oil, a sample liquid reservoir (11), a sheath fluid reservoir (14), a collection reservoir (12), and a discharged liquid reservoir (13) were connected by micro flow paths. NOVEC 7500 was used as the sheath fluid.

Particles before sorting were placed in the sample fluid reservoir 11 and merged with the oil in the sheath fluid reservoir to converge the droplets in the center of the main flow path. There is an illumination region 20 in the middle of the main flow path where the laser beam is illuminated. By detecting the light signals such as scattered light and/or fluorescence generated when the droplet passed through the illumination region 20, it was determined whether the droplet was a droplet to be sorted or not. Droplets in oil containing cells such as bacteria could be identified rapidly by the scattered light without staining.

The identified droplets were taken into the collection flow path by generating a pulse flow at the timing when they passed through the downstream cross-branched sorting region, and were collected in the collection reservoir. The flow rate of droplet was about 0.1 m/sec and the duration of the pulse flow for sorting was 2 msec. The pulse flow is set to generate at intervals of time that pass through the width of the collection flow path in the sorting region.

A constant-pressure pump, which gives pressure pulses to the main flow path in the flow path chip, and an electromagnetic valve connected to the pump, are located outside the flow path chip. A control unit is provided, to control the operation of the above electromagnetic valve based on the signal from the detection means of the light signal generated when a droplet passes through the illumination region. In an airtight air system consisting of an electromagnetic air valve in series with a constant air pump, a pulse flow is generated when the pressure of the air pump causes the movement of liquid in the microchannel only when the electromagnetic valve is OPEN for a short time. The fluid in this pulse flow is the sheath flow of oil, which is continuously supplied from upstream. When the pressure of the constant-pressure pump is higher than atmospheric pressure, the pressure is pushing against the main flow path (PUSH pressure), and when the pressure is lower, the pressure is pulling back (PULL pressure). In the present invention, the droplet is collected by pushing the droplet into the collection flow path using the pulse flow caused by the PUSH pressure. The droplets flowing into the collection flow path are taken into the collection reservoir connected to the collection flow path.

An example of dispensing droplets from a collection reservoir after sorting droplets in fluorine based oil is explained in Figure 13. Fluorine oil and mineral oil were filled into the collection reservoir in advance. The mineral oil floats on top of the fluorine oil, and the interface between the mineral oil and the fluorine oil forms a convex dome. The specific gravity of the droplet is almost equal to that of water, smaller than that of fluorine oil, and larger than that of mineral oil. Therefore, the droplets are trapped on the ceiling at the center of the domed -shaped interface. By aspirating one droplet for each mineral oil and fluorinated oil with a pipette, the droplet can be dispensed into a multiwell plate. Each droplet can be sequentially dispensed into different wells of the multi-well plate.

Figure 14(A) is a schematic diagram showing the trapped droplets in the collection reservoir and a photograph of a droplet.

Figure 14(B) is a schematic diagram showing a droplet after being aspirated from the collection reservoir by a pipette and dispensed into multi-wells, and a photograph of the droplet. In the droplets in the wells after dispensing, the spherical fluorine oil is present in the mineral oil, and droplets in the upper part of the spherical shape.

### «Example5»

In this example, droplets in fluorine oil were collected by breaking them.

In order to remove cells from droplets in oil containing cells, droplets in oil containing cells and droplets in oil containing no cells were mixed and stored in a container. In this condition, the droplets were fused in the vicinity of an electrode radiating a high-frequency alternating electric field as an electromagnetic wave. In this method, it is not necessary to place droplets between the electrodes. This fusion separates the oil layer from the liquid layer, and the cells can be extracted from the inside of the droplet to the liquid layer of the outside. This method cannot be applied to the destruction of a single droplet dispensed one by one. This is because the fusion phenomenon does not occur unless there are droplet(s) in the vicinity of a single droplet. In order to destroy one droplet dispensed in each well of a multi-well plate, it is necessary to mix several empty droplets that do not contain cells. The volume of the liquid layer in oil after fusion was increased, and then it mixed with the culture medium to be cultured in the plate. This droplet disruption enabled the culture of a single E. coli.

In order to induce fusion between droplets, high-frequency electromagnetic waves was illuminated to a group of droplets. Specifically, as explained in Figure 15, the frequency belonged to the range of long wave. In particular, the electromagnetic wave of 35 kHz in the range of long wave was illuminated. The output power of the electromagnetic wave source is about 1W, which can be applied to a group of droplets in a multi-well plate without placing the droplets between the electrodes. The fusion of droplets occurred in about 10 seconds after the power was turned on, and the separation of the oil layer from the liquid layer was observed.

As shown in Figure 16, the droplets dispensed into the wells of the multi-well plate were also subjected to long-wave illumination by placing a sheet of electrode patterns at the bottom of the multi-well plate after dispensing additional empty droplet groups containing no cells. The electrodes of the sheet of electrode patterns are connected to the electrodes of the long-wave illumination source shown in Figure 15.

### INDUSTRIAL APPLICABILITY

The method and device for detecting particles in droplets of the present invention can easily detect droplets containing particles.

### REFERENCE SIGNS LIST

1: Droplet in oil (Water in oil);
2: Illumination light;
3: Fow path wall surface;
4: Lens;
5: Light shield plate;
6: Photodetector;
7: Signal waveform of forward scattered signal (FSC);
8: Scattered light signal from inside particle of droplet in oil;
10: sorting collection flow path;
11: Sample liquid reservoir;
12: Collection reservoir;
13: Discharged liquid reservoir;
14: Sheath liquid reservoir;
15: Droplet of interest of sorting;
16: Droplet of not interest of sorting;
17: Droplet in fluorine based oil introduction flow path;
18: Fluorine based oil sheath liquid introduction flow path;
19: Main flow path;
20: Illumination region (Detection region);
21: Fluorine based oil;
22: Mineral oil;
23: Sorted droplet;
24: Multi-well plate;
25: Pipette of dispensing head;
30: Electrode for long-wave illumination;
31: Multi-well plate;
32: Electrode;
33: Resin sheet;

## Claims

1. A method for detecting a particle in droplet by illuminating light with one direction onto the particle which is contained in a droplet (water in oil) while it is flowing together with the oil in a flow path and detecting changes in the intensity of the light signal from the particles over time, **characterized in that** the particle in the droplet is detected by measuring the scattered light of the droplet and the scattered light of the particle.

2. The method for detecting a particle in droplet according to claim 1, wherein the scattered light is a forward scattered light.

3. The method for detecting a particle in droplet according to claim 1 or 2, wherein the measurement of the scattered light of the particle is set as the measurement time of the scattered light of the particle at a predetermined time after a certain elapsed time from the start of the scattered light generation of the droplet.

4. The method for detecting a particle in droplet according to any one of claims 1 to 3, wherein a liquid contained in the droplet is a hydrogel.

5. The method for detecting a particle in droplet according to any one of claims 1 to 3, wherein the particle is a cell.

6. The method for detecting a particle in droplet according to claim 4, wherein the hydrogel is a low melting point gel, and the method comprises the steps of:
(a) encapsulating a liquid containing the particle and the low melting point gel into droplet at a temperature between the melting point of the low melting point gel and 40°C, to form water in oil, and
(b) allowing to stand the droplet below the melting point to gelate the liquid.

7. The method for detecting a particle in droplet according to claim 6, wherein the method further comprises the step of (c) culturing the particle which is the cell.

8. The method for detecting a particle in droplet according to claim 6 or 7, wherein the method further comprises the step of (d) collecting the droplet containing the particle to a collection flow path by pulse flow.

9. The method for detecting a particle in droplet according to claim 7, wherein a cell proliferation is detected by change in pH in the droplet.

10. The method for detecting a particle in droplet according to claim 7, wherein the change in pH is detected by using a dye whose fluorescence spectrum changes depending on pH.

11. A method for collecting a particle inside water in oil to outside of a droplet, comprising the step of applying electromagnetic wave to two or more droplets in oil to fuse and destroy the droplets.

12. A method for collecting a particle inside water in oil to outside of a droplet, comprising the step of adding droplet(s) in oil containing no particle to droplet(s) in oil containing a particle, and fusing and destroying the droplets by applying electromagnetic waves to the group of droplets in oil.

13. The method for collecting a particle inside water in oil to outside of a droplet according to claim 12 or 13, wherein the electromagnetic waves are applied to the droplet(s) in oil in a well of a multi-well plate.

14. The method for collecting a particle inside water in oil to outside of a droplet according to claim 13, wherein the electromagnetic waves are applied to the droplet(s) in oil by using an electrode pattern placed on a bottom of the well.

15. A device for detecting a particle in droplet by illuminating light with one direction onto the particle which is contained in water in oil while it is flowing together with the oil in a flow path and detecting changes in the intensity of the light signal from the particles over time,
**characterized in that** the particle in the droplet is detected by measuring the scattered light of the droplet and the scattered light of the particle.

16. A dispensing method, wherein a droplet of interest in water in fluorine-based oil is taken into a collection flow path by pulse flow, and the droplet flows from flow path into a collection reservoir, and then the droplet is taken into a dispensing pipette by the procedure of floating due to the difference in specific gravity between fluorine oil and droplet, and then the dispensing pipette is dispensed into a multi-well plate.
